# EUROPEAN PATENT APPLICATION

(11) **EP 3 816 229 A1**
(43) Date of publication of application: **05.05.2021**
(21) Application number: 19825486.4
(22) Date of filing: 07.06.2019
(51) Int. Cl.: C08L 63/00, C08G 59/22, C08G 59/50, C08G 77/26, C08K 5/09, C08L 83/08, D06M 13/184, D06M 15/647

(54) **SILICONE COMPOSITION AND FIBER TREATMENT AGENT USING SAME**

(30) Priority: 28.06.2018 JP 2018123092
(71) Applicant: SHIN-ETSU CHEMICAL CO., LTD., Tokyo 100-0004 (JP)
(72) Inventor: HAMAJIMA, Yuta, Annaka-shi, Gunma 379-0224 (JP)
(74) Representative: Mewburn Ellis LLP
(86) International application number: PCT/JP2019/022696
(87) International publication number: WO 2020/003971

(57) **Abstract**

This silicone composition containing (A) a copolymer comprising polysiloxane and polyalkylene oxide repeating units, (B) a polyether-modified silicone, and/or (C) an organic acid has high dispersibility in water, and a fiber treatment agent containing the composition can impart good flexibility and water absorbency to fibers, and furthermore exhibits high washing durability.

## Description

### TECHNICAL FIELD

The present invention relates to water-dispersible silicone compositions. More specifically, the invention relates to silicone compositions which impart high water absorbency to textile fibers, and to textile treatment agents containing such compositions.

### BACKGROUND ART

A variety of organopolysiloxanes, such as dimethylpolysiloxanes, epoxy group-containing polysiloxanes and aminoalkyl group-containing polysiloxanes, have hitherto been widely used as treatment agents for imparting softness, smoothness and other desirable properties to various types of textile fibers and products.

In general, textile fibers that have been treated with a treatment agent in which the main ingredient is a polysiloxane exhibit water repellency. Even textile fibers that are inherently water-absorbing exhibit hydrophobic properties following treatment with a polysiloxane. When such a treatment agent is used in clothing, for instance, one drawback has been that the perspiration-absorbing action of the clothing during perspiration is substantially lost. This has led to studies aimed at imparting textile fibers with both softness and water absorbency. For example, although the water absorbency is improved by including both aminoalkyl groups and polyoxyalkylene groups in the same polysiloxane molecule, including polyoxyalkylene groups on the molecule greatly diminishes properties such as softness and smoothness. To alleviate such drawbacks, modification of the aminoalkyl groups by reacting an aminoalkyl group-containing polysiloxane with a polyoxyalkylene glycidyl ether compound has been described (JP No. 3199609 and JP-A 2014-84398: Patent Documents 1 and 2).

Block copolymers in which siloxane and polyoxyalkylene blocks alternate are also used in this field (JP No. 3859723 and JP-A 2004-528412: Patent Documents 3 and 4).

Block copolymers with alternating siloxane and polyoxyalkylene blocks exhibit a good softness and water absorbency in textile fibers, but the block copolymer by itself has a low water dispersity. For this reason, when treating textile fibers, it is common to either use the block copolymer after diluting it with a large amount of solvent or to disperse it together with a surfactant in water and use it as an emulsion.

### PRIOR ART DOCUMENTS

### PATENT DOCUMENTS

Patent Document 1: JP No. 3199609
Patent Document 2: JP-A 2014-84398
Patent Document 3: JP No. 3859723
Patent Document 4: JP-A 2004-528412

### SUMMARY OF THE INVENTION

### TECHNICAL PROBLEM

In view of the above problem in the prior art, an object of this invention is to provide silicone compositions which have an excellent water dispersibility and exhibit water absorbency at the surfaces of textile fibers treated therewith, particularly water-dispersible silicone compositions which exhibit a good durability and enable the fiber surfaces to maintain water absorbency even after washing treatment. Another object is to provide textile treatment agents containing such silicone compositions.

### SOLUTION TO THE PROBLEM

The inventor has conducted investigations aimed at achieving these objects and has found as a result that silicone compositions which include (A) a copolymer composed of recurring units of polysiloxane and polyalkylene oxide and (B) a polyether-modified silicone and/or (C) an organic acid have a high water dispersibility. The inventor has also discovered that textile treatment agents containing such a composition can impart a good softness and water absorbency to textile fibers, and moreover exhibit a high durability to washing. These discoveries have ultimately led to the present invention.

Accordingly, the present invention provides the following silicone compositions and textile treatment agents.
[1] A silicone composition which includes component (A1) below, and component (B) and/or component (C) below:
   (A1) 100 parts by weight of a copolymer which has siloxane groups and polyoxyalkylene groups on the molecule and is the product of a reaction between a nitrogen atom-containing organopolysiloxane of general formula (1-1) below and a polyoxyalkylene group-containing epoxy compound of general formula (2-1) or (2-2) below 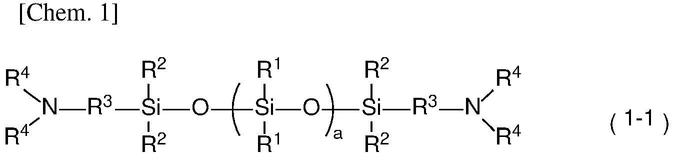 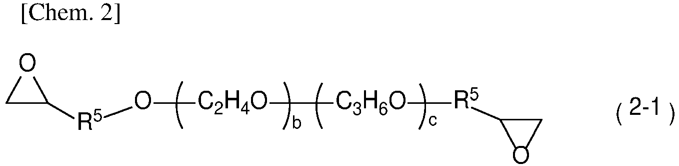 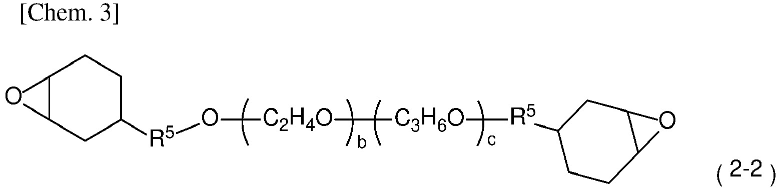 (wherein each R¹ is independently an alkyl group of 1 to 6 carbon atoms or a phenyl group; each R² is independently R¹, an alkoxy group of 1 to 6 carbon atoms or a hydroxyl group; each R³ is independently a divalent organic group; each R⁴ is independently a hydrogen atom or a monovalent hydrocarbon group of 1 to 6 carbon atoms, with the proviso that at least one of the R⁴ groups bonded to each nitrogen atom is a hydrogen atom; each R⁵ is independently a divalent organic group; and a is an integer from 1 to 1,000, b is an integer from 0 to 100, c is an integer from 0 to 100 and b+c is an integer from 1 to 100);
   (B) from 1 to 50 parts by weight of a polyether-modified silicone of general formula (4) below 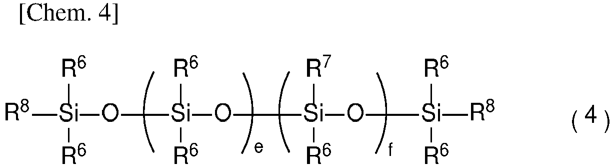 (wherein each R⁶ is independently a phenyl group, an alkyl group of 1 to 6 carbon atoms, an alkoxy group of 1 to 6 carbon atoms or a hydroxyl group; each R⁷ is independently a monovalent organic group of the formula -C_{g}H_{2g}O(C₂H₄O)ₕ(C₃H₆O)ᵢR⁹; each R⁸ is independently R⁶ or R⁷; R⁹ is a hydrogen atom, an alkyl group of 1 to 6 carbon atoms or an acetyl group; and e is an integer from 0 to 100, f is an integer from 0 to 100, e+f is an integer from 0 to 200, g is an integer from 2 to 5, h is an integer from 1 to 40 and i is an integer from 0 to 40, with the proviso that when f = 0, at least one R⁸ group is R⁷); and
   (C) from 0.1 to 20 parts by weight of an organic acid.
[2] A silicone composition which includes component (A2) below, and component (B) and/or component (C) below:
   (A2) 100 parts by weight of a copolymer which has siloxane groups and polyoxyalkylene groups on the molecule and is the product of a reaction between an epoxy group-containing organopolysiloxane of general formula (1-2) or (1-3) below and a polyoxyalkylene group-containing amine compound of general formula (2-3) below 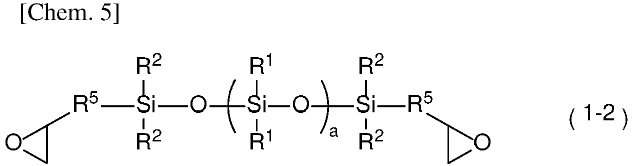 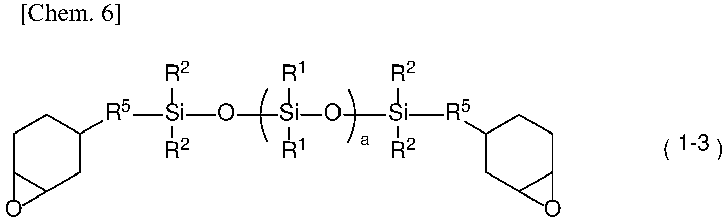 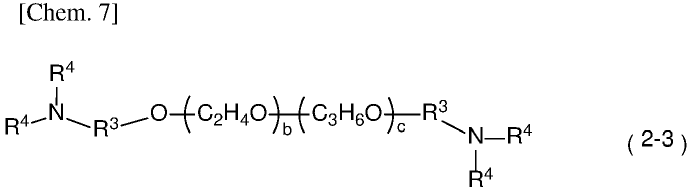 (wherein each R¹ is independently an alkyl group of 1 to 6 carbon atoms or a phenyl group; each R² is independently R¹, an alkoxy group of 1 to 6 carbon atoms or a hydroxyl group; each R³ is independently a divalent organic group; each R⁴ is independently a hydrogen atom or a monovalent hydrocarbon group of 1 to 6 carbon atoms, with the proviso that at least one of the R⁴ groups bonded to each nitrogen atom is a hydrogen atom; each R⁵ is independently a divalent organic group; and a is an integer from 1 to 1,000, b is an integer from 0 to 100, c is an integer from 0 to 100 and b+c is an integer from 1 to 100);
   (B) from 1 to 50 parts by weight of a polyether-modified silicone of general formula (4) below 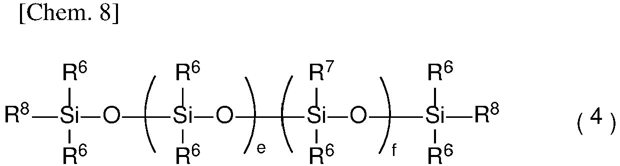 (wherein each R⁶ is independently a phenyl group, an alkyl group of 1 to 6 carbon atoms, an alkoxy group of 1 to 6 carbon atoms or a hydroxyl group; each R⁷ is independently a monovalent organic group of the formula -C_{g}H_{2g}O(C₂H₄O)ₕ(C₃H₆O)ᵢR⁹; each R⁸ is independently R⁶ or R⁷; R⁹ is a hydrogen atom, an alkyl group of 1 to 6 carbon atoms or an acetyl group; and e is an integer from 0 to 100, f is an integer from 0 to 100, e+f is an integer from 0 to 200, g is an integer from 2 to 5, h is an integer from 1 to 40 and i is an integer from 0 to 40, with the proviso that when f = 0, at least one R⁸ group is R⁷); and
   (C) from 0.1 to 20 parts by weight of an organic acid.
[3] The silicone composition of [1] or [2], wherein the subscript e in formula (4) for component (B) is an integer from 0 to 50.
[4] A textile treatment agent which includes the silicone composition of any of [1] to [3].
[5] The textile treatment agent of [4] which further includes (D) water.

### ADVANTAGEOUS EFFECTS OF THE INVENTION

The silicone compositions of the invention have excellent water dispersibility and can impart a high water absorbency to textile fiber surfaces. In addition, textile treatment agents using the silicone compositions of the invention have an excellent durability to washing and can maintain a good water absorbency at textile fiber surfaces even after washing treatment.

### DESCRIPTION OF EMBODIMENTS

The invention is described in detail below.

The silicone composition of the invention includes (A) a copolymer made up of recurring units of polysiloxane and polyalkylene oxide, and (B) a polyether-modified silicone and/or (C) an organic acid.

### Component (A)

Component (A1) or component (A2) shown below is used as a copolymer made up of recurring units of polysiloxane and polyalkylene oxide that serves as component (A).

Component (A1) is a copolymer which has siloxane groups and polyoxyalkylene groups on the molecule and is obtained by reacting a nitrogen atom-containing organopolysiloxane of general formula (1-1) below with a polyoxyalkylene group-containing epoxy compound of general formula (2-1) or (2-2) below: 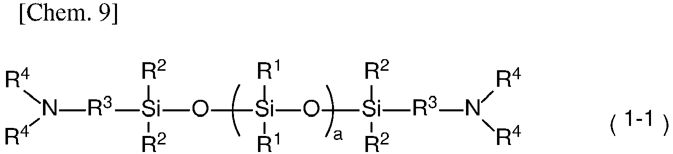 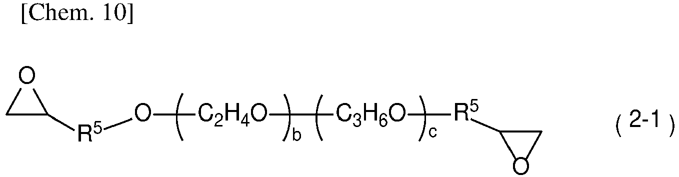 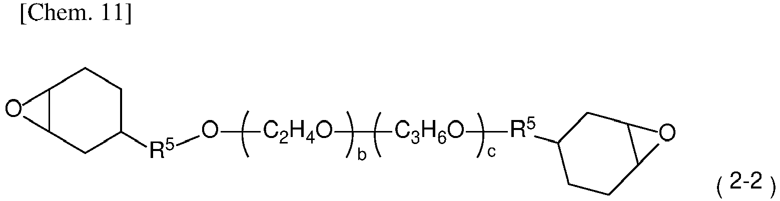 (wherein each R¹ is independently an alkyl group of 1 to 6 carbon atoms or a phenyl group; each R² is independently R¹, an alkoxy group of 1 to 6 carbon atoms or a hydroxyl group; each R³ is independently a divalent organic group; each R⁴ is independently a hydrogen atom or a monovalent hydrocarbon group of 1 to 6 carbon atoms, with the proviso that at least one of the R⁴ groups bonded to each nitrogen atom is a hydrogen atom; each R⁵ is independently a divalent organic group; and a is an integer from 1 to 1,000, b is an integer from 0 to 100, c is an integer from 0 to 100, and b+c is an integer from 1 to 100).

Component (A2) is a copolymer which has siloxane groups and polyoxyalkylene groups on the molecule and is obtained by reacting an epoxy group-containing organopolysiloxane of general formula (1-2) or (1-3) below with a polyoxyalkylene group-containing amine compound of general formula (2-3) below: 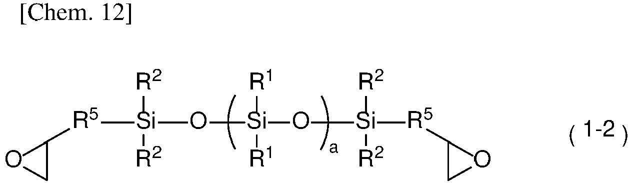 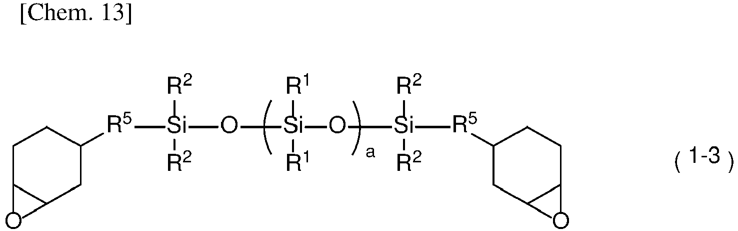 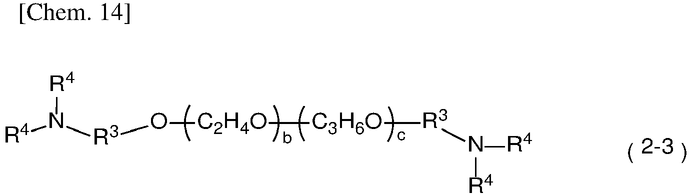 (wherein R¹ R², R³, R⁴, R⁵, a, b, c and b+c are the same as above).

In the above formulae (1-1), (1-2) and (1-3), each R¹ is independently a methyl, ethyl, propyl, butyl or other alkyl group of 1 to 6 carbon atoms or a phenyl group; preferably an alkyl group of 1 to 3 carbon atoms or a phenyl group; and more preferably a methyl group or a phenyl group.

In the above formulae (1-1), (1-2) and (1-3), each R² is independently R¹, a methoxy, ethoxy, propoxy group or other alkoxy group of 1 to 6 carbon atoms or a hydroxyl group; preferably R¹, an alkoxy group of 1 to 3 carbon atoms or a hydroxyl group; and more preferably R¹, a methoxy group, an ethoxy group or a hydroxyl group.

In the above formulae (1-1) and (2-3), each R³ is independently a divalent organic group. If the divalent organic group of R³ is a group having at least one carbon atom, it may contain a nitrogen atom, may have a hydroxyl group or may have an ether bond. R³ is exemplified by groups of the following formula 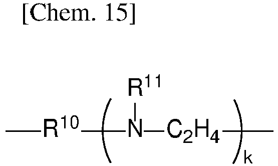 (wherein R¹⁰ is a divalent hydrocarbon group of 1 to 10 carbon atoms, preferably a divalent hydrocarbon group of 1 to 6 carbon atoms; each R¹¹ is independently a hydrogen atom or a monovalent hydrocarbon group of 1 to 4 carbon atoms; and k is an integer from 0 to 4, preferably 0 or 1).

Here, examples of the divalent hydrocarbon group of 1 to 10 carbon atoms of R¹⁰ include alkylene groups such as methylene, ethylene, propylene (trimethylene, methylethylene), butylene (tetramethylene, methylpropylene), hexamethylene and octamethylene groups; arylene groups such as the phenylene group; and combinations of two or more of these groups (e.g. alkylene-arylene groups).

R¹¹ is a hydrogen atom or a monovalent hydrocarbon group of 1 to 4 carbon atoms. Examples of the monovalent hydrocarbon group of 1 to 4 carbon atoms include alkyl groups such as methyl, ethyl, propyl and butyl groups.

R³ is more preferably an ethylene group, trimethylene group, methylethylene group or -CH₂CH₂CH₂-NH-CH₂CH₂-.

In the above formulae (1-1) and (2-3), each R⁴ is independently a hydrogen atom or a methyl, ethyl, propyl, butyl or other monovalent hydrocarbon group of 1 to 6 carbon atoms, preferably a hydrogen atom or a monovalent hydrocarbon group of 1 to 4 carbon atoms, more preferably a hydrogen atom or a methyl group, and most preferably a hydrogen atom. At least one R⁴ bonded to a nitrogen atom is a hydrogen atom, and both ends of the molecular chain each have a NH group.

In the above formulae (2-1), (2-2), (1-2) and (1-3), R⁵ is a divalent organic group, preferably a divalent hydrocarbon group of 1 to 10 carbon atoms which may have an intervening oxygen atom, and more preferably a divalent hydrocarbon group of 1 to 6 carbon atoms which may have an intervening oxygen atom. Specific examples of R⁵ include alkylene groups such as methylene, ethylene, propylene (trimethylene, methylethylene) butylene (tetramethylene, methylpropylene), hexamethylene and octamethylene groups, arylene groups such as a phenylene group, combinations of two or more of these groups (e.g. alkylene-arylene groups), -CH₂CH₂-O-CH₂CH₂-, -CH₂CH₂CH₂-O-CH₂- and -CH(CH₃)CH₂-O-CH(CH₃)CH₂-. It is especially preferable for R⁵ to be a methylene, ethylene or trimethylene group or -CH₂CH₂CH₂-O-CH₂-.

In the above formulae (1-1), (1-2) and (1-3), the subscript a is an integer from 1 to 1,000, preferably an integer from 5 to 500, and more preferably an integer from 10 to 300.

When the subscript a is 0, the silicone composition of the invention, in cases where it is used as a softener, lacks the ability to impart a good hand to textile fibers; when the subscript a is larger than 1,000, the dispersibility of the silicone composition in water decreases.

In the above formulae (2-1), (2-2) and (2-3), b is an integer from 0 to 100, c is an integer from 0 to 100 and b+c is an integer from 1 to 100. Preferably, b is an integer from 1 to 70, c is an integer from 0 to 50 and b+c is an integer from 1 to 70. More preferably, b is an integer from 1 to 50, c is an integer from 0 to 30 and b+c is an integer from 3 to 50. When b+c is 0, the water dispersibility decreases; when b+c is larger than 100, the silicone composition of the composition lacks a sufficient softness-imparting effect on textile fibers.

Also, the polyoxyalkylene group represented by (C₂H₄O)_{b}(C₃H₆O)_{c} may have a block structure or a random structure.

Specific, non-limiting, examples of the nitrogen atom-containing organopolysiloxane of formula (1-1) include the following: 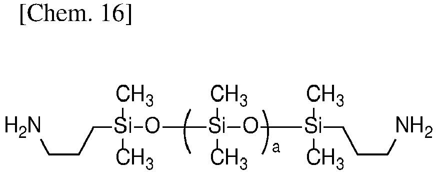 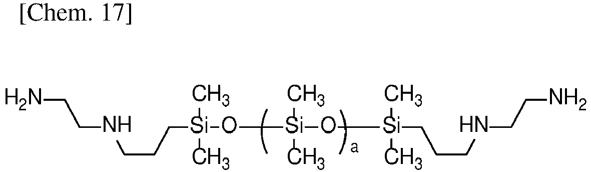 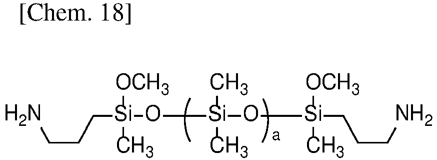 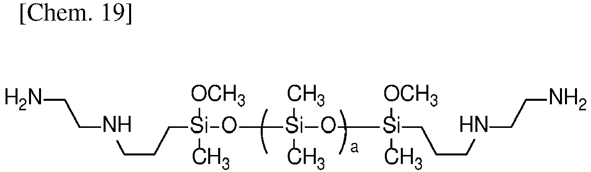 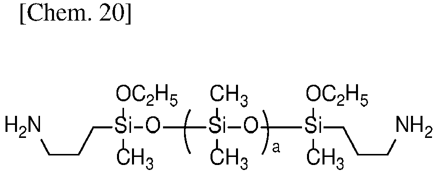 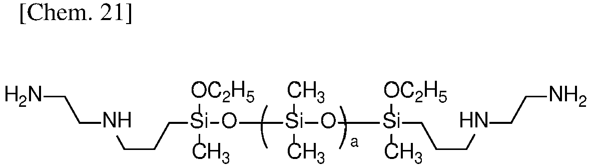 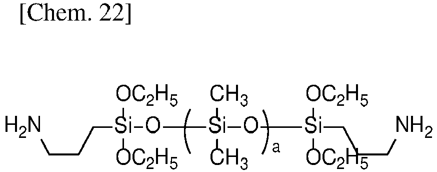 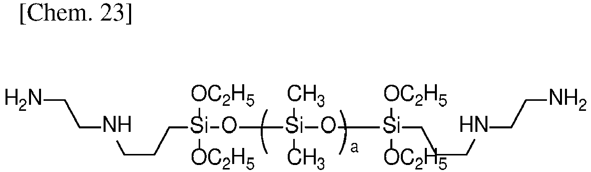 (wherein a is the same as above).

Specific, non-limiting, examples of the polyoxyalkylene group-containing epoxy compound of formula (2-1) include the following: 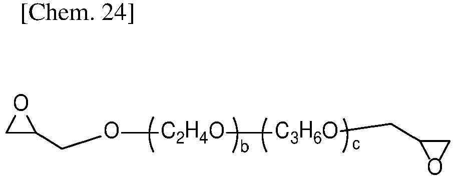 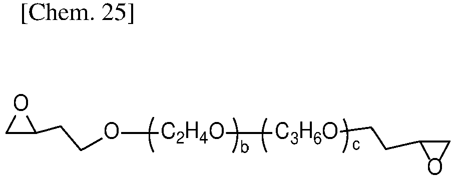 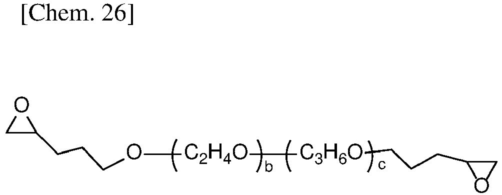 (wherein b and c are the same as above).

Specific, non-limiting, examples of the polyoxyalkylene group-containing epoxy compound of formula (2-2) include the following: 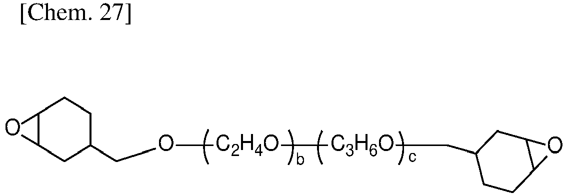 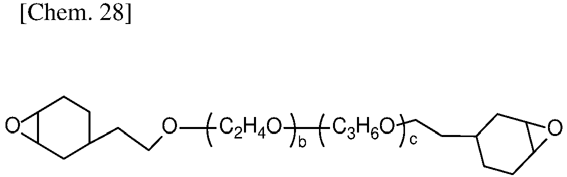 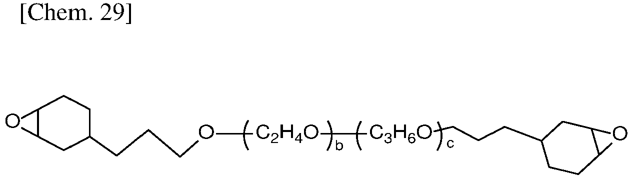 (wherein b and c are the same as above).

Specific, non-limiting, examples of the epoxy group-containing organopolysiloxane of formula (1-2) include the following: 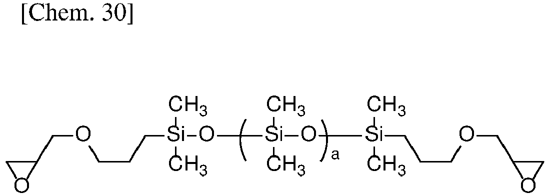 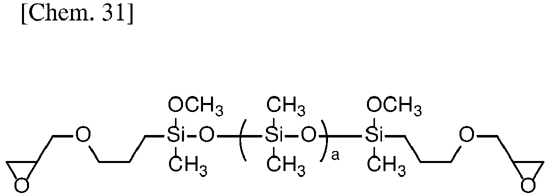 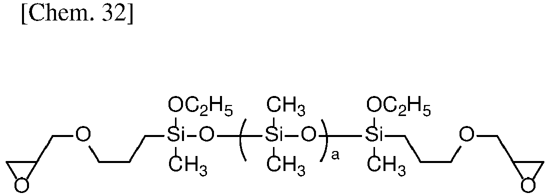 (wherein a is the same as above).

Specific, non-limiting, examples of the epoxy group-containing organopolysiloxane of formula (1-3) include the following: 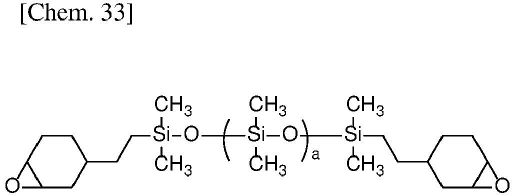 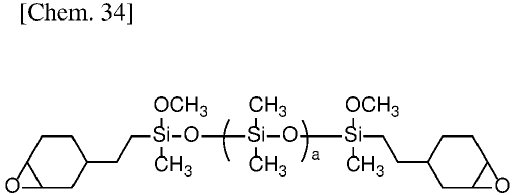 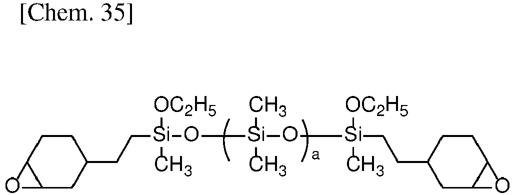 (wherein a is the same as above).

Specific, non-limiting, examples of the polyoxyalkylene group-containing amine compound of formula (2-3) include the following: 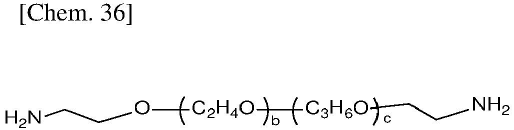 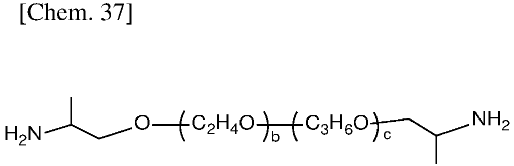 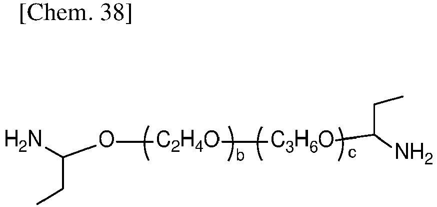 (wherein b and c are the same as above).

Specific, non-limiting, examples of component (A1) include copolymers of the following formulae: 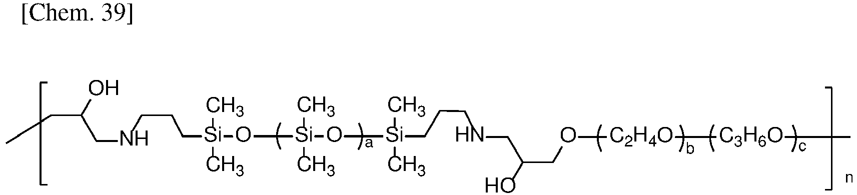 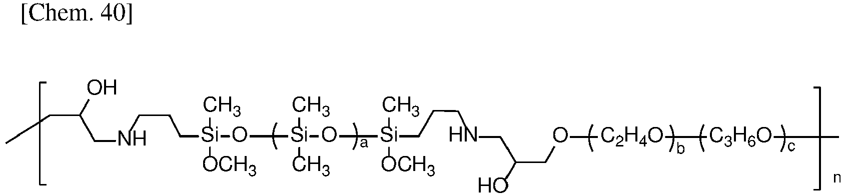 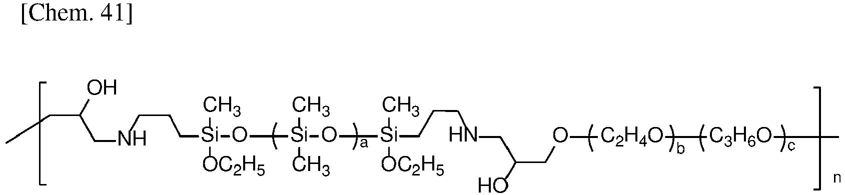 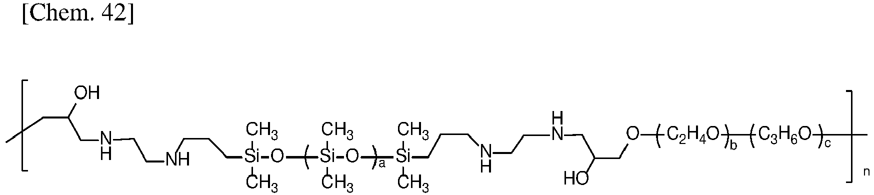 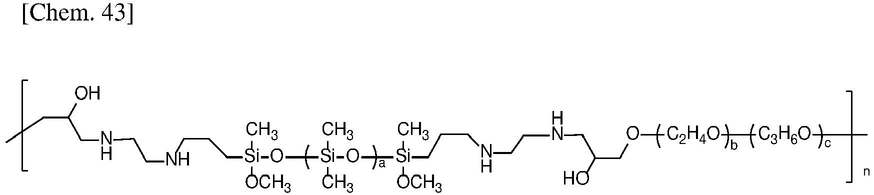 (wherein a, b and c are the same as above, and n is from 1 to 100).

Specific, non-limiting, examples of component (A2) include copolymers of the following formulae: 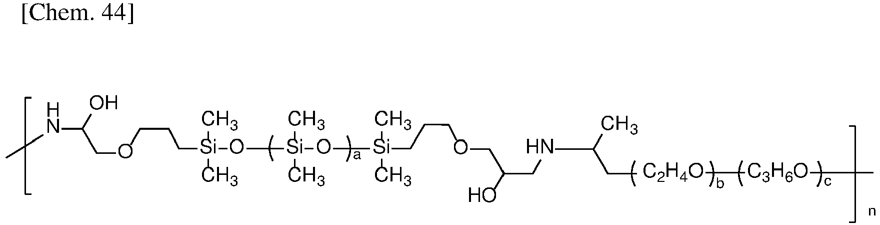 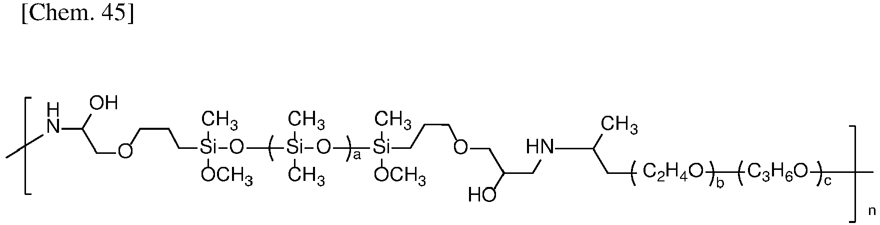 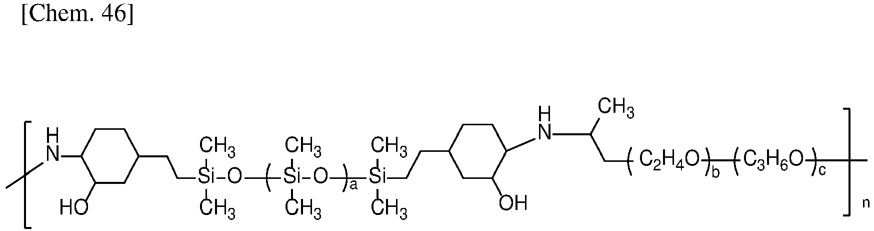 (wherein a, b and c are the same as above, and n is from 1 to 100).

Here, the copolymer of component (A) may be prepared by a known method. For example, the copolymer serving as component (A1) can be prepared by heating a nitrogen atom-containing organopolysiloxane of formula (1-1) and a polyoxyalkylene group-containing epoxy compound of formula (2-1) or (2-2) in an organic solvent and thereby reacting amino groups on the nitrogen atom-containing organopolysiloxane with epoxy groups on the polyoxyalkylene group-containing epoxy compound. Alternatively, the copolymer serving as component (A2) can be prepared by heating an epoxy group-containing organopolysiloxane of formula (1-2) or (1-3) and a polyoxyalkylene group-containing amine compound of formula (2-3) in an organic solvent and thereby reacting amino groups on the polyoxyalkylene group-containing amine compound with epoxy groups on the epoxy group-containing organopolysiloxane. As used in this invention, "amino group" refers to a -N(R⁴)₂ group; that is, a -NH₂ group or a -NHR^{4'} group (R^{4'} being a monovalent hydrocarbon group of 1 to 6 carbon atoms).

In the method of preparing the copolymer serving as component (A1), when reacting the nitrogen atom-containing organopolysiloxane of formula (1-1) with the polyoxyalkylene group-containing epoxy compound of formula (2-1) or (2-2), the ratio therebetween is preferably such that the amount of epoxy groups on the polyoxyalkylene group-containing epoxy compound of formula (2-1) or (2-2) per mole of amino groups on the nitrogen atom-containing organopolysiloxane of formula (1-1) is from 0.67 to 1.5 moles, and more preferably from 0.8 to 1.25 moles. When there is too little polyoxyalkylene group-containing epoxy compound of formula (2-1) or (2-2), the water dispersibility of the silicone composition may decrease or gelation may occur at the time of the reaction.

In the method of preparing the copolymer serving as component (A2), when reacting the epoxy group-containing organopolysiloxane of formula (1-2) or (1-3) with the polyoxyalkylene group-containing amine compound of formula (2-3), the ratio therebetween is preferably such that the amount of epoxy groups on the epoxy group-containing organopolysiloxane of formula (1-2) or (1-3) per mole of amino groups on the polyoxyalkylene group-containing amine compound of formula (2-3) is from 0.67 to 1.5 moles, and more preferably from 0.8 to 1.25 moles. When there is too little polyoxyalkylene group-containing amine compound of formula (2-3), the water dispersibility of the silicone composition may decrease or gelation may occur at the time of the reaction. When there is too much polyoxyalkylene group-containing amine compound of formula (2-3), gelation may occur at the time of the reaction.

The organic solvent used in the reaction is not particularly limited. Examples include aromatic hydrocarbon solvents such as toluene and xylene; hydrocarbon solvents such as hexane and octane; ether solvents such as dibutyl ether, dioxane and tetrahydrofuran (THF); ester solvents such as ethyl acetate and butyl acetate; ketone solvents such as methyl ethyl ketone (MEK); alcohol solvents such as ethanol, isopropanol and 1-butanol; and chlorinated hydrocarbon solvents. Of these, alcohol solvents, which have a high reaction rate-enhancing effect, are preferred.

The amount of organic solvent used is not particularly limited. However, when preparing the copolymer of component (A1), the amount of organic solvent used is preferably from 10 to 1,000 parts by weight, and more preferably from 20 to 500 parts by weight, per 100 parts by weight of the sum of the nitrogen atom-containing organopolysiloxane of formula (1-1) and the polyoxyalkylene group-containing epoxy compound of formula (2-1) or (2-2).

When preparing the copolymer of component (A2), the amount of organic solvent used is preferably from 10 to 1,000 parts by weight, and more preferably from 20 to 500 parts by weight, per 100 parts by weight of the sum of the epoxy group-containing organopolysiloxane of formula (1-2) or (1-3) and the polyoxyalkylene group-containing amine compound of formula (2-3).

The temperature of the above reaction also is not particularly limited, although a temperature in the range of 50 to 120°C, especially 70 to 110°C, is desirable. At below 50°C, there is a possibility of the reaction rate decreasing. At above 120°C, the possibility of discoloration rises. The reaction time also is not particularly limited, but is preferably from 1 to 10 hours, and especially from 2 to 8 hours.

The resulting component (A) copolymer has a molecular weight of preferably from 1,500 to 150,000, and more preferably from 2,000 to 50,000. When the molecular weight is too small, the softness-imparting effect on textile fibers may decrease. When the molecular weight is too large, the water dispersibility may decrease. In this invention, the molecular weight is a polystyrene-equivalent number-average molecular weight determined by gel permeation chromatography using tetrahydrofuran (THF) as the developing solvent (the same applies below).

The component (A) copolymer thus obtained may be included in the composition as an organic solvent solution, that is, without removing the above organic solvent.

### Component (B)

Component (B) is a polyether-modified silicone of general formula (4) below. Component (B) may be of one type used alone or two or more may be suitably combined and used together. 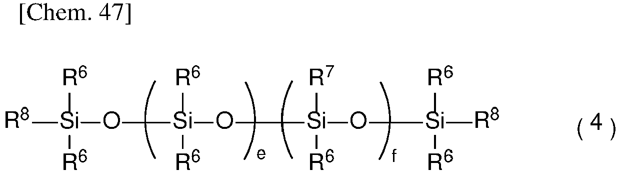 In the formula, each R⁶ is independently a phenyl group, an alkyl group of 1 to 6 carbon atoms, an alkoxy group of 1 to 6 carbon atoms or a hydroxyl group; each R⁷ is independently a monovalent organic group of the formula -C_{g}H_{2g}O(C₂H₄O)ₕ(C₃H₆O)ᵢR⁹; each R⁸ is independently R⁶ or R⁷; R⁹ is a hydrogen atom, an alkyl group of 1 to 6 carbon atoms or an acetyl group; and e is an integer from 0 to 100, f is an integer from 0 to 100, e+f is an integer from 0 to 200, g is an integer from 2 to 5, h is an integer from 1 to 40 and i is an integer from 0 to 40. When f = 0, at least one R⁸ group is R⁷.

In formula (4), each R⁶ is independently a phenyl group, an alkyl group of 1 to 6 carbon atoms, an alkoxy group of 1 to 6 carbon atoms or a hydroxyl group. Specific examples of R⁶ include alkyl groups such as methyl, ethyl, propyl, butyl, pentyl and hexyl groups; a phenyl group; alkoxy groups such as methoxy, ethoxy, propoxy, butoxy and hexyloxy groups; and a hydroxyl group. Preferred examples are methyl, ethyl, phenyl, methoxy and ethoxy groups.

Also, in formula (4), each R⁷ is independently a monovalent organic group of the formula -C_{g}H_{2g}O(C₂H₄O)ₕ(C₃H₆O)ᵢR⁹. Here, R⁹ is a hydrogen atom, an alkyl group of 1 to 6 carbon atoms or an acetyl group. Specific examples of R⁹ include a hydrogen atom, alkyl groups such as methyl, ethyl, propyl, butyl and pentyl groups, and an acetyl group. Also, g is an integer from 2 to 5, preferably from 2 to 4; h is an integer from 1 to 40, preferably from 1 to 20; and i is an integer from 0 to 40, preferably from 0 to 20.

In formula (4), e is an integer from 0 to 100, preferably an integer from 0 to 50, and more preferably an integer from 0 to 30. Also, f is an integer from 0 to 100, preferably an integer from 1 to 50, and more preferably an integer from 1 to 30. The sum e+f is an integer from 0 to 200, preferably an integer from 1 to 100, and more preferably an integer from 1 to 60.

In formula (4), when f = 0, at least one R⁸ group is R⁷. Moreover, in this invention, there are preferably from 1 to 10, more preferably from 1 to 5, R⁷ groups in formula (4).

Specific examples of component (B) are shown below: 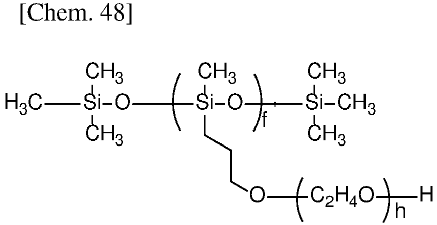 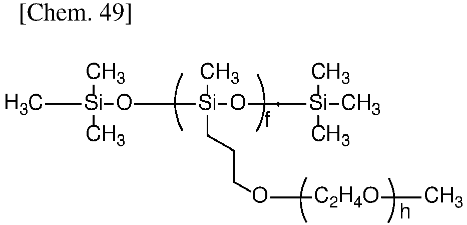 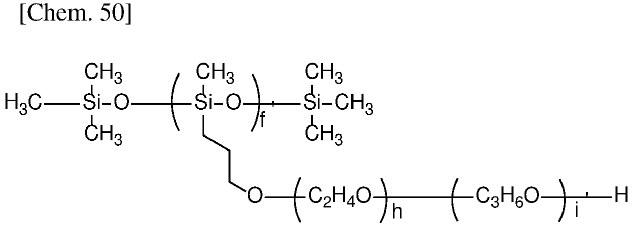 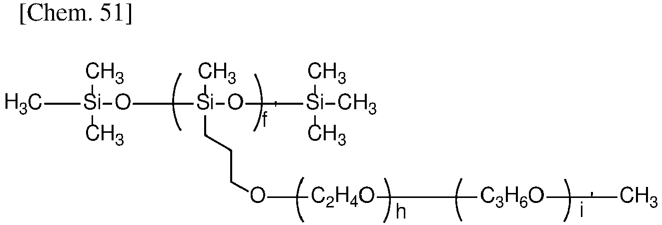 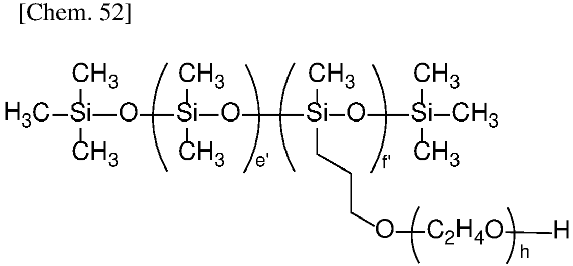 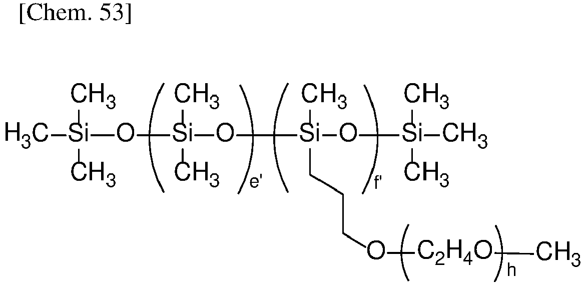 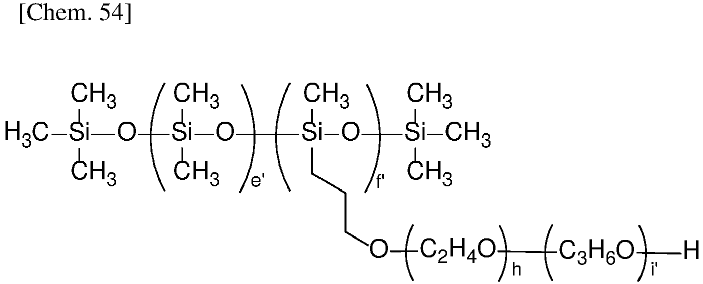 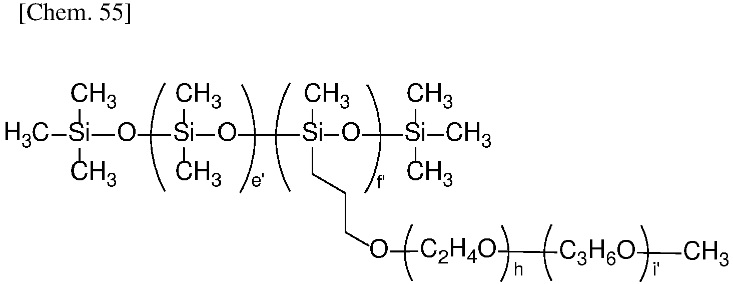 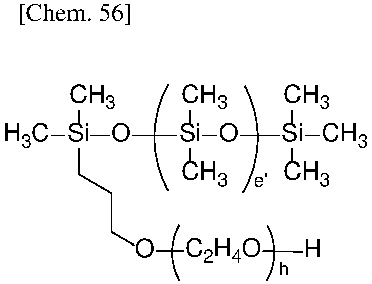 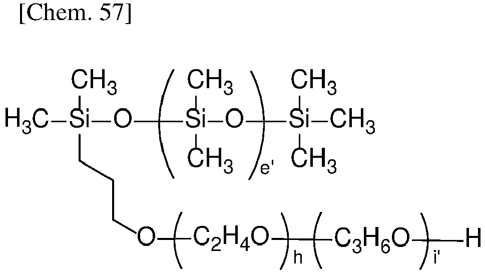 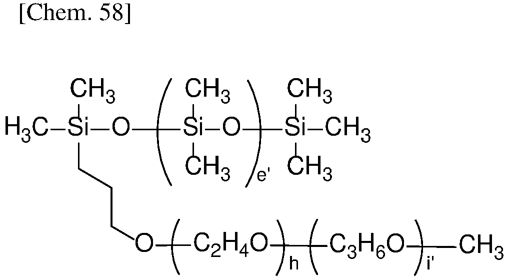 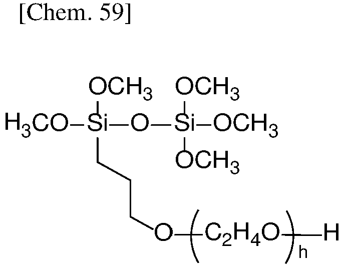 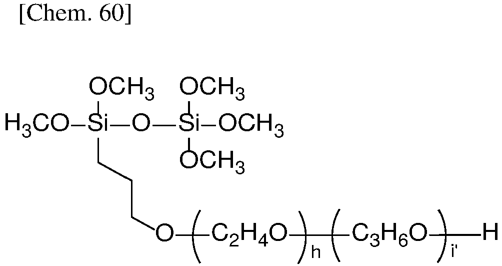 (wherein e' and f' are each integers from 1 to 100, h is the same as above, and i' is an integer from 1 to 40).

When component (B) is included, the content thereof is from 1 to 50 parts by weight, preferably from 5 to 50 parts by weight, and more preferably from 10 to 40 parts by weight, per 100 parts by weight of component (A). When too little component (B) is included, the water absorbency of the surfaces of textile fibers treated therewith is inadequate; when too much component (B) is included, the stability of the composition decreases.

The working effect of component (B) of the invention appears to be as follows. The copolymer of component (A) includes a polysiloxane as a primary ingredient, and thus has an excellent softness-imparting effect on textile fibers. Even when component (A) is used alone, owing to the polyalkylene oxide included on the molecule, it is also expected to have a water absorbency-imparting effect on textile fibers. However, with component (A) alone, the water dispersibility is poor. Because component (B) has a high affinity to component (A) and also has a high affinity to water, it has an emulsifying agent-like effect and so is thought to be able to enhance the water dispersibility of component (A).

### (C) Organic Acid

Component (C) is organic acid. This may be of one type used alone or two or more may be used in suitable combination.

The organic acid is exemplified by monocarboxylic acids, dicarboxylic acids, hydroxycarboxylic acids, aromatic carboxylic acids and acidic amino acids. Specific examples include monocarboxylic acids such as acetic acid, propionic acid and caprylic acid; dicarboxylic acids such as malonic acid, succinic acid, glutaric acid, adipic acid, maleic acid and fumaric acid; hydroxycarboxylic acids such as glycolic acid, lactic acid, hydroxyacrylic acid, glyceric acid, malic acid, tartaric acid and citric acid; aromatic carboxylic acids selected from benzoic acid, salicylic acid and phthalic acid; and acidic amino acids such as glutamic acid and aspartic acid.

When component (C) is included, the content thereof is from 0.1 to 20 parts by weight, preferably from 0.5 to 15 parts by weight, and more preferably from 1 to 10 parts by weight, per 100 parts by weight of component (A). When too little component (C) is included, the dispersibility in water may be inadequate; when too much is included, the stability of the composition may decrease.

The working effect of component (C) appears to be as follows. Adding the organic acid of component (C) is thought to cationize some of the amino groups included in component (A), enhancing the dispersibility in water. It is thought that the cationization of some of the amino groups in component (A) increases the hydrophilicity of the ingredients remaining on a treated fabric, enhancing the water absorbency of the treated fabric.

Together with component (A), the silicone composition of the invention may include either component (B) or component (C), or may include both components (B) and (C). It preferably includes both components (B) and (C).

The silicone composition of the invention can be prepared by uniformly mixing component (A) together with component (B) and/or component (C) in the usual manner.

The silicone composition of the invention may be suitably used as a textile treatment agent. The textile treatment agent containing the silicone composition of the invention is preferably one obtained by dissolving the above silicone composition in an organic solvent, dispersing the silicone composition in water, or using an emulsifying agent such as a nonionic, anionic, cationic or amphoteric surfactant to render the silicone composition into an emulsion.

Here, the amount of the above silicone composition (component (A), and component (B) and/or component (C)) in the textile treatment agent is preferably from 0.01 to 10 wt%, more preferably from 0.1 to 5 wt%, and especially from 0.5 to 3 wt%, of the textile treatment agent. When the amount of the silicone composition is too low, the softness-imparting effect on textile fibers may decrease; when it is too high, yellowing of the fibers tends to proceed.

The textile treatment agent of the invention may include (D) water. When water (D) is included, the content thereof per 100 parts by weight of the silicone composition is preferably from 10 to 10,000 parts by weight, and more preferably from 20 to 6,000 parts by weight.

Various solvents may be optionally used in the textile treatment agent of the invention.

Specific examples of the solvent include ether solvents such as dibutyl ether, dioxane and THF; ketone solvents such as acetone and methyl ethyl ketone (MEK); and alcohol solvents such as methanol, ethanol, 2-propanol, n-butanol, sec-butanol, 2-ethyl-1-hexanol, 2-methoxyethanol, 2-ethoxyethanol, 2-butoxyethanol, ethylene glycol, diethylene glycol, triethylene glycol, propylene glycol, dipropylene glycol, tripropylene glycol, 1,2-propanediol, 1,3-propanediol, 1,2-butanediol, 1,3-butanediol, 1,4-butanediol, 2,3-butanediol, 2-methyl-1,2-propanediol, 1,5-pentanediol, 2-methyl-2,3-butanediol, 1,6-hexanediol, 1,2-hexanediol, 2,5-hexanediol, 2-methyl-2,4-pentanediol, 2,3-dimethyl-2,3-butanediol, 2-ethyl-1,6-hexanediol, 1,2-octanediol, 1,2-decanediol, 2,2,4-trimethylpentanediol, 2-butyl-2-ethyl-1,3-propanediol and 2,2-diethyl-1,3-propanediol; and aromatic solvents such as toluene and xylene. These solvents may be used singly or two or more may be used together.

When included, the organic solvent is used in an amount per 100 parts by weight of the silicone composition which, although not particularly limited, is preferably from 2,000 to 200,000 parts by weight, and more preferably from 10,000 to 100,000 parts by weight.

The emulsifying agent used when rendering the textile treatment agent of the invention into an emulsion is not particularly limited. Examples include nonionic surfactants such as ethoxylated higher alcohols, ethoxylated alkyl phenols, polyol fatty acid esters, ethoxylated polyol fatty acid esters, ethoxylated fatty acids, ethoxylated fatty acid amides, sorbitol, sorbitan fatty acid esters, ethoxylated sorbitan fatty acid esters and sucrose fatty acid esters. These have a hydrophilic-lipophilic balance (HLB) that is preferably in the range of 5 to 20, and more preferably in the range of 10 to 16. Examples of anionic surfactants include higher alcohol sulfuric acid ester salts, alkyl phenyl ether sulfuric acid ester salts, alkylbenzene sulfonic acid salts, higher alcohol phosphoric acid ester salts, ethoxylated higher alcohol sulfuric acid ester salts, ethoxylated alkyl phenyl ether sulfuric acid ester salts and ethoxylated higher alcohol phosphoric acid salts. Examples of cationic surfactants include alkyltrimethylammonium chlorides, alkylamine hydrochlorides, cocoamine acetate, alkylamine acetates and alkylbenzenedimethylammonium chlorides. Examples of amphoteric surfactants include N-acylamidopropyl-N,N-dimethylammonium betaines and N-acylamidopropyl-N,N'-dimethyl-N'-β-hydroxypropylammonium betaines.

When included, the emulsifying agent is used in an amount per 100 parts by weight of the silicone composition which is preferably from 0.5 to 50 parts by weight, and more preferably from 5 to 30 parts by weight,. Also, the amount of water used during emulsification should be set such that the concentration of nitrogen atom-containing organopolysiloxane, expressed in terms of the pure component, is from 10 to 80 wt%, and preferably from 20 to 70 wt%.

The above emulsion can be obtained by a known method wherein the silicone composition and the emulsifying agent are mixed together, and this mixture is emulsified using an emulsifier such as a homogenizing mixer, homogenizer, colloid mill, line mixer, universal mixer (trade name), Ultra Mixer (trade name), Planetary Mixer (trade name), Combi Mix (trade name) or three-roll mixer.

Various ingredients, including textile finishes such as anti-creasing agents, flame retardants, antistatic agents and heat stabilizers, and also antioxidants, ultraviolet absorbers, pigments, metal flake pigments, rheology control agents, curing accelerators, deodorants and antimicrobial agents, may further be added to the textile treatment agent of the invention within ranges that do not detract from the objects of the invention.

When the textile treatment agent of the invention is applied to textile fibers, application to the fibers may be carried out by dipping, spraying or roll coating. The pickup differs with the type of fiber and is not particularly limited, although the total pickup of components (A) and (B) when component (A) or component (B) is included in the silicone composition included in the textile treatment agent is generally set in the range of 0.01 to 100 wt% of the fiber weight. The textile fibers may then be dried by hot air blowing, a heating oven or the like. Although the conditions vary with the type of fiber, drying may be carried out at between 100°C and 180°C for a period of from 30 seconds to 5 minutes.

The textile treatment agent of the invention is not particularly limited as to the textile fibers and textile products treatable therewith, and is effective on natural fibers such as cotton, silk, linen, wool, angora and mohair, on synthetic fibers such as polyester, polyethylene, polypropylene, nylon, acrylics and spandex, and also on blended fibers in which these have been combined. Nor are there any limitations on the form and shape of such textile fibers and textile products, the textile treatment of the invention being suitable for use in treating not only raw materials such as staple fiber, filament, tow and yarn, but also various processed forms such as knit fabric, woven fabric, batting and nonwoven fabric.

Apart from textile treatment applications, the silicone composition of the invention can also be used in a variety of other applications, such as in paints and coatings, adhesives, sealants and inks, in impregnating agents and surface treatments for paper and the like, and in cosmetics. In such cases, additives may be optionally used.

Examples of such additives include textile finishes such as anti-creasing agents, flame retardants, antistatic agents and heat stabilizers, and also antioxidants, ultraviolet absorbers, pigments, metal flake pigments, rheology control agents, curing accelerators, deodorants and antimicrobial agents. These additives may be used singly, or two or more may be used together.

### EXAMPLES

The invention is described more fully below by way of Examples according to the invention and Comparative Examples, although these Examples do not limit the invention.

In the following Examples, parts are indicated by weight, the ¹H-NMR spectra are measured in heavy chloroform as the solvent with a 400 MHz FT-NMR spectrometer (JEOL, Ltd.), and the molecular weights are polystyrene-equivalent number-average molecular weights obtained by gel permeation chromatography (GPC) using THF as the developing solvent.

### Synthesis Example 1

A separable flask fitted with a thermometer, a stirrer, a reflux condenser and a nitrogen inlet was charged with 200 g (amount of amino groups, 0.13 mol) of the aminoalkyl group-containing organopolysiloxane of formula (X-1) below, 23.4 g (amount of epoxy groups, 0.13 mol) of the polyoxyalkylene group-containing epoxy compound of formula (Y-1) below and 521.3 g of isopropanol, and nitrogen gas was introduced to the flask, following which the flask was sealed and an addition reaction was carried out at 80°C for 4 hours.

¹H-NMR spectroscopy was used to confirm that at least 99 mol% of the charged epoxy groups had been consumed.

A 30 wt% isopropanol solution a-1 of the copolymer (molecular weight, 15,000) of formula (A-1) below was obtained. 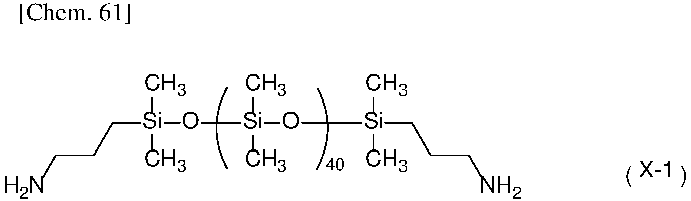 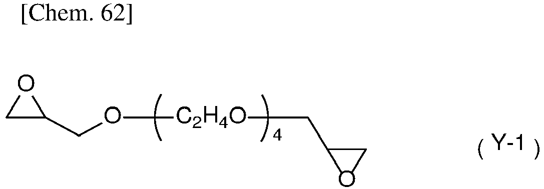 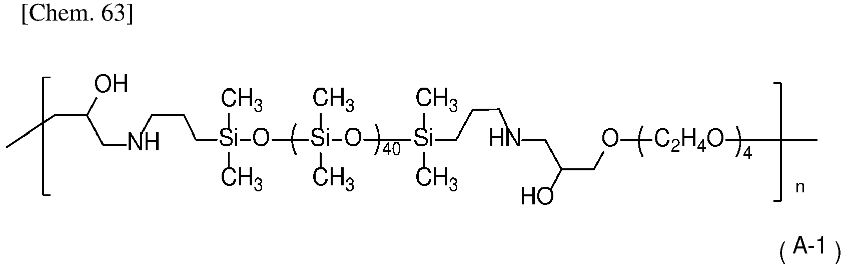 (wherein n is a number that gives the above-indicated molecular weight)

### Synthesis Example 2

A separable flask fitted with a thermometer, a stirrer, a reflux condenser and a nitrogen inlet was charged with 111 g (amount of amino groups, 0.05 mol) of the aminoalkyl group-containing organopolysiloxane of formula (X-2) below, 8.88 g (amount of epoxy groups, 0.05 mol) of the polyoxyalkylene group-containing epoxy compound of above formula (Y-1) and 280 g of isopropanol, and nitrogen gas was introduced to the flask, following which the flask was sealed and an addition reaction was carried out at 80°C for 4 hours.

¹H-NMR spectroscopy was used to confirm that at least 99 mol% of the charged epoxy groups had been consumed.

A 30 wt% isopropanol solution a-2 of the copolymer (molecular weight, 23,000) of formula (A-2) below was obtained. 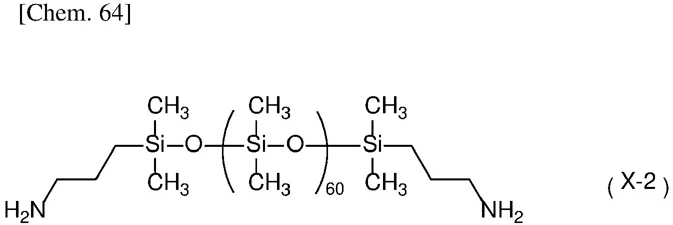 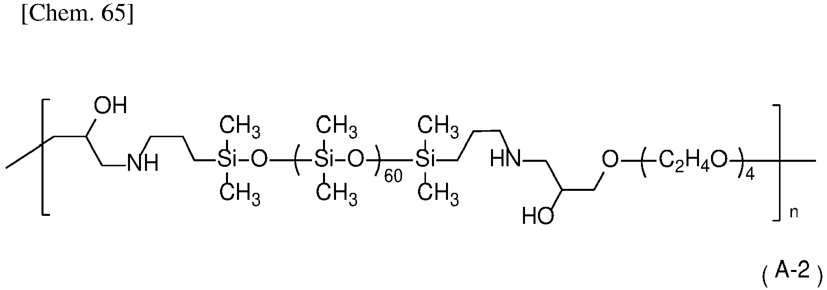 (wherein n is a number that gives the above-indicated molecular weight)

### Synthesis Example 3

A separable flask fitted with a thermometer, a stirrer, a reflux condenser and a nitrogen inlet was charged with 108 g (amount of amino groups, 0.05 mol) of the aminoalkyl group-containing organopolysiloxane of formula (X-2) below, 12 g (amount of epoxy groups, 0.05 mol) of the polyoxyalkylene group-containing epoxy compound of above formula (Y-2) and 280 g of isopropanol, and nitrogen gas was introduced to the flask, following which the flask was sealed and an addition reaction was carried out at 80°C for 4 hours.

¹H-NMR spectroscopy was used to confirm that at least 99 mol% of the charged epoxy groups had been consumed.

A 30 wt% isopropanol solution a-3 of the copolymer (molecular weight, 27,000) of formula (A-3) below was obtained. 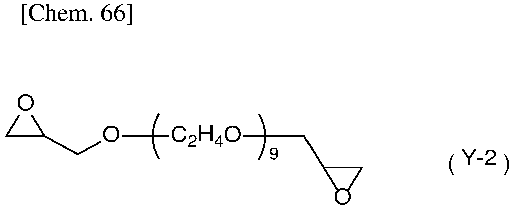 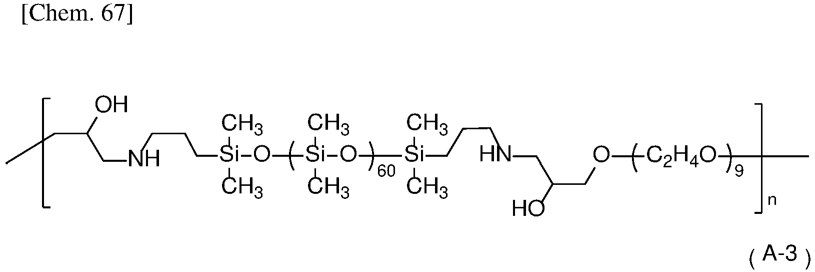 (wherein n is a number that gives the above-indicated molecular weight)

### Synthesis Example 4

A separable flask fitted with a thermometer, a stirrer, a reflux condenser and a nitrogen inlet was charged with 110 g (amount of amino groups, 0.04 mol) of the aminoalkyl group-containing organopolysiloxane of formula (X-3) below, 10 g (amount of epoxy groups, 0.04 mol) of the polyoxyalkylene group-containing epoxy compound of above formula (Y-2) and 280 g of isopropanol, and nitrogen gas was introduced to the flask, following which the flask was sealed and an addition reaction was carried out at 80°C for 4 hours.

¹H-NMR spectroscopy was used to confirm that at least 99 mol% of the charged epoxy groups had been consumed.

A 30 wt% isopropanol solution a-4 of the copolymer (molecular weight, 38,000) of formula (A-4) below was obtained. 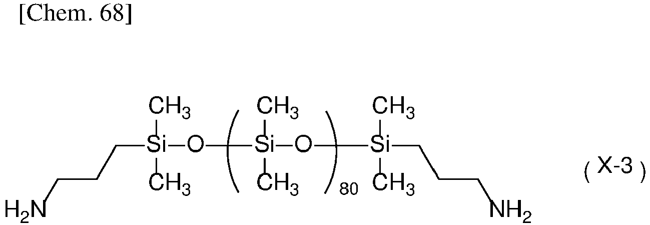 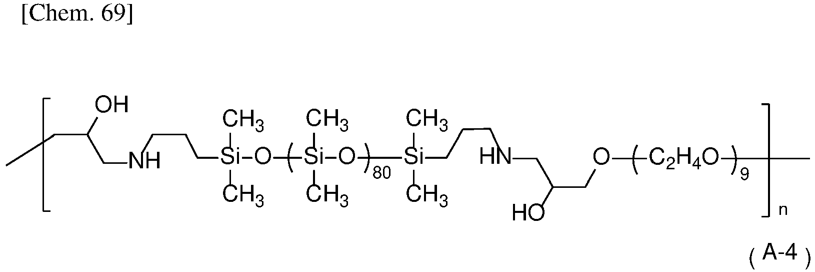 (wherein n is a number that gives the above-indicated molecular weight)

### Synthesis Example 5

In general accordance with the method for preparing the copolymer AB-20-18 of Table 2 in an example in JP No. 3859723, 30.5 g (amount of amino groups, 0.06 mol) of the amine compound of formula (Y-3) below and 80.5 g of isopropanol were charged into a separable flask fitted with a thermometer, a stirrer, a reflux condenser, a dropping funnel and a nitrogen inlet, and mixed together. The temperature of the mixture was adjusted to 80°C, and 50 g of polysiloxane (amount of epoxy groups, 0.05 mol) was added dropwise from the dropping funnel. After stirring under applied heat at 80°C for 6 hours, ¹H-NMR spectroscopy was used to confirm that at least 99 mol% of the charged epoxy groups had been consumed, thereby obtaining silicone product a-5. 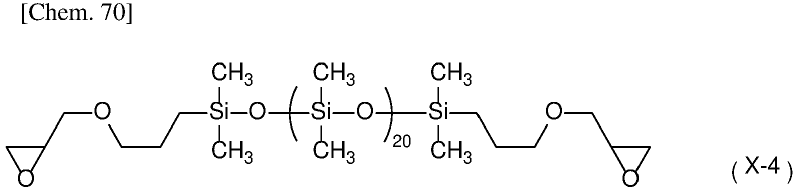 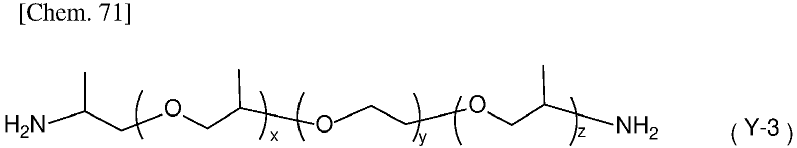 (wherein x+z = 6, y = 12.5; JEFFAMINE, from HUNTSMAN)

The block copolymer in a-5 is presumed to have the structural formula shown in formula (A-5) below (molecular weight, 11,000). 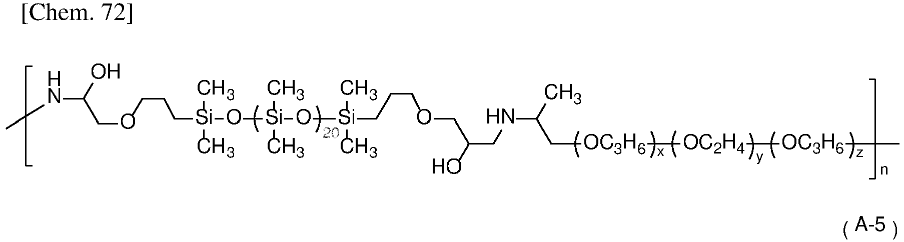 (wherein x, z, and y are the same as above, and n is a number that gives the above-indicated molecular weight)

### Example 1

One hundred parts of the 30 wt% isopropanol solution a-1 of the copolymer of formula (A-1) obtained in Synthesis Example 1 and 10 parts of the polyether-modified silicone of formula (B-1) below were mixed together, giving Silicone Composition (1).

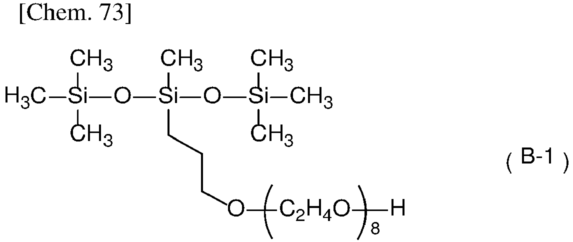

### Example 2

One hundred parts of the 30 wt% isopropanol solution a-1 of the copolymer of formula (A-1) obtained in Synthesis Example 1 and 10 parts of the polyether-modified silicone of formula (B-2) below were mixed together, giving Silicone Composition (2).

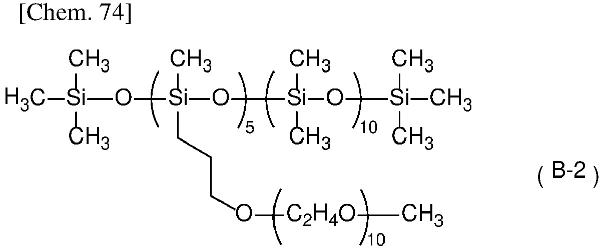

### Example 3

One hundred parts of the 30 wt% isopropanol solution a-2 of the copolymer of formula (A-2) obtained in Synthesis Example 2 and 10 parts of the polyether-modified silicone of above formula (B-1) were mixed together, giving Silicone Composition (3).

### Example 4

One hundred parts of the 30 wt% isopropanol solution a-3 of the copolymer of formula (A-3) obtained in Synthesis Example 3 and 10 parts of the polyether-modified silicone of above formula (B-1) were mixed together, giving Silicone Composition (4).

### Example 5

One hundred parts of the 30 wt% isopropanol solution a-4 of the copolymer of formula (A-4) obtained in Synthesis Example 4 and 10 parts of the polyether-modified silicone of above formula (B-1) were mixed together, giving Silicone Composition (5).

### Example 6

One hundred parts of the 30 wt% isopropanol solution a-1 of the copolymer of formula (A-1) obtained in Synthesis Example 1 and 2 parts of lactic acid were mixed together, giving Silicone Composition (6).

### Example 7

One hundred parts of the 30 wt% isopropanol solution a-1 of the copolymer of formula (A-1) obtained in Synthesis Example 1 and 2 parts of acetic acid were mixed together, giving Silicone Composition (7).

### Example 8

One hundred parts of the 30 wt% isopropanol solution a-3 of the copolymer of formula (A-3) obtained in Synthesis Example 3 and 2 parts of lactic acid were mixed together, giving Silicone Composition (8).

### Example 9

One hundred parts of the 30 wt% isopropanol solution a-1 of the copolymer of formula (A-1) obtained in Synthesis Example 1, 5 parts of the polyether-modified silicone of above formula (B-1) and 2 parts of lactic acid were mixed together, giving Silicone Composition (9).

### Example 10

One hundred parts of the 30 wt% isopropanol solution a-1 of the copolymer of formula (A-1) obtained in Synthesis Example 1, 5 parts of the polyether-modified silicone of above formula (B-1) and 2 parts of acetic acid were mixed together, giving Silicone Composition (10).

### Example 11

One hundred parts of the 30 wt% isopropanol solution a-3 of the copolymer of formula (A-3) obtained in Synthesis Example 3, 5 parts of the polyether-modified silicone of above formula (B-1) and 2 parts of lactic acid were mixed together, giving Silicone Composition (11).

### Comparative Example 1

The silicone product a-5 obtained in Synthesis Example 5 was used alone.

### Comparative Example 2

The 30 wt% isopropanol solution a-1 of the copolymer of formula (A-1) obtained in Synthesis Example 1 was used alone.

### Comparative Example 3

One hundred parts of the 30 wt% isopropanol solution a-1 of the copolymer of formula (A-1) obtained in Synthesis Example 1 and 0.1 part of the polyether-modified silicone of above formula (B-1) were mixed together, giving Silicone Composition (12).

### Comparative Example 4

One hundred parts of the 30 wt% isopropanol solution a-1 of the copolymer of formula (A-1) obtained in Synthesis Example 1 and 0.1 part of lactic acid were mixed together, giving Silicone Composition (13).

### Comparative Example 5

One hundred parts of the 30 wt% isopropanol solution a-1 of the copolymer of formula (A-1) obtained in Synthesis Example 1, 0.1 part of the polyether-modified silicone of above formula (B-1) and 0.01 part of lactic acid were mixed together, giving Silicone Composition (14).

### Comparative Example 6

One hundred parts of the 30 wt% isopropanol solution a-3 of the copolymer of formula (A-3) obtained in Synthesis Example 3, 0.1 part of the polyether-modified silicone of above formula (B-1) and 0.01 part of lactic acid were mixed together, giving Silicone Composition (15).

### Evaluation Tests

### 1. Water Dispersibility

After placing 0.2 g of the silicone composition (in the case of Comparative Example 1, a silicone product; in the case of Comparative Example 2, a 30 wt% isopropanol solution of the copolymer; the same applies below) obtained in the respective above Examples according to the invention and Comparative Examples together with 9.8 g of deionized water in a glass vial and shaking the vial, the appearance of the vial contents was checked and the water dispersibility was evaluated based on the following criteria. The results are shown in Tables 1 to 3.
○ Dispersion of the sample in water is possible.
×: Dispersion of the sample in water is not possible.

### 2. Softness

Test liquors were prepared by adding 193.33 g of deionized water to 6.67 g of the silicone compositions obtained in the above Examples of the invention and stirring. Test liquors were also prepared by adding 193.33 g of toluene to 6.67 g of the silicone compositions obtained in the above Comparative Examples and stirring. A polyester/cotton broadcloth (65%/35%, from Tanigashira Shoten) was dipped for 1 minute in the test liquor, following which a roller was used to squeeze the cloth to a percent expression of 10% (meaning a pickup of the copolymer or, in cases where a polyether-modified silicone is included, a total pickup of the copolymer and the polyether-modified silicone within the silicone composition included in the test liquor that corresponds to 10 wt% of the fiber weight), and heat-treated for 2 minutes at 150°C, thereby producing a treated cloth for softness evaluation. A panel of three judges tested the treated cloth by touching it with their hands and rated the softness according to the following criteria. The results are shown in Tables 1 to 3.
A: Very pleasant to the touch
B: Pleasant to the touch
C: Unpleasant to the touch

### 3. Water Absorbency

Test liquors were prepared by adding 193.33 g of deionized water to 6.67 g of the silicone compositions obtained in the above Examples of the invention and stirring. Test liquors were also prepared by adding 193.33 g of toluene to 6.67 g of the silicone compositions obtained in the above Comparative Examples and stirring. A polyester/cotton broadcloth (65%/35%, from Tanigashira Shoten) was dipped for 1 minute in these test liquors, following which a roller was used to squeeze the cloth to a percent expression of 10% (meaning a pickup of the copolymer or, in cases where a polyether-modified silicone is included, a total pickup of the copolymer and the polyether-modified silicone within the silicone composition included in the test liquor that corresponds to 10 wt% of the fiber weight), and heat-treated for 2 minutes at 150°C. A single drop (25 µL) of tap water was then deposited on the treated cloth with a dropping pipette, and the time in seconds until the drop is completely absorbed by the cloth was measured (pre-wash water absorbency). This treated cloth was subsequently washed once with a washing machine by a procedure in accordance with JIS L0217 103. A single drop (25 µL) of tap water was then deposited with a dropping pipette on the treated cloth that had been washed, and the time in seconds until the drop is completely absorbed by the cloth was measured (post-wash water absorbency). The results are shown in Tables 1 to 3.

### 4. Durability to Washing

Test liquors were prepared by adding 193.33 g of deionized water to 6.67 g of the silicone compositions obtained in the above Examples of the invention and stirring. Test liquors were also prepared by adding 193.33 g of toluene to 6.67 g of the silicone compositions obtained in the above Comparative Examples and stirring. A polyester/cotton broadcloth (65%/35%, from Tanigashira Shoten) was dipped for 1 minute in these test liquors, following which a roller was used to squeeze the cloth to a percent expression of 10% (meaning a pickup of the copolymer or, in cases where a polyether-modified silicone is included, a total pickup of the copolymer and the polyether-modified silicone within the silicone composition included in the test liquor that corresponds to 10 wt% of the fiber weight), and heat-treated for 2 minutes at 150°C. This treated cloth was subsequently washed once with a washing machine by a procedure in accordance with JIS L0217 103. The amount of silicone remaining on the fiber surfaces after a single wash was measured with a fluorescence x-ray spectrometer (Rigaku Corporation). The residual ratio (%) compared with when washing is not carried out was calculated. The results are shown in Tables 1 to 3.

**Table 1**

| Contents (parts) | | Example 1 | Example 2 | Example 3 | Example 4 | Example 5 |
|---|---|---|---|---|---|---|
| (A) | (A-1) | 100 | 100 | | | |
| | (A-2) | | | 100 | | |
| | (A-3) | | | | 100 | |
| | (A-4) | | | | | 100 |
| (B) | (B-1) | 33.33 | | 33.33 | 33.33 | 33.33 |
| | (B-2) | | 33.33 | | | |
| (C) | Lactic acid | | | | | |
| | Acetic acid | | | | | |
| Silicone composition | | (1) | (2) | (3) | (4) | (5) |

| Evaluation results | | | | | | |
|---|---|---|---|---|---|---|
| Water dispersibility | | ○ | ○ | ○ | ○ | ○ |
| Softness | | A | A | A | A | A |
| Pre-wash water absorbency (s) | | 20 | 18 | 22 | 18 | 26 |
| Post-wash water absorbency (s) | | 60 | 55 | 61 | 56 | 63 |
| Durability to washing (residual ratio, %) | | 53 | 56 | 55 | 59 | 68 |

**Table 2**

| Contents (parts) | | Example 6 | Example 7 | Example 8 | Example 9 | Example 10 | Example 11 |
|---|---|---|---|---|---|---|---|
| (A) | (A-1) | 100 | 100 | | 100 | 100 | |
| | (A-2) | | | | | | |
| | (A-3) | | | 100 | | | 100 |
| | (A-4) | | | | | | |
| (B) | (B-1) | | | | 16.67 | 16.67 | 16.67 |
| | (B-2) | | | | | | |
| (C) | Lactic acid | 6.67 | | 6.67 | 6.67 | | 6.67 |
| | Acetic acid | | 6.67 | | | 6.67 | |
| Silicone composition | | (6) | (7) | (8) | (9) | (10) | (11) |

| Evaluation results | | | | | | | |
|---|---|---|---|---|---|---|---|
| Water dispersibility | | ○ | ○ | ○ | ○ | ○ | ○ |
| Softness | | A | A | A | A | A | A |
| Pre-wash water absorbency (s) | | 76 | 80 | 72 | 15 | 17 | 19 |
| Post-wash water absorbency (s) | | 35 | 41 | 32 | 36 | 40 | 33 |
| Durability to washing (residual ratio, %) | | 72 | 71 | 75 | 58 | 64 | 51 |

**Table 3**

| Contents (parts) | | Comparative Example 1 | Comparative Example 2 | Comparative Example 3 | Comparative Example 4 | Comparative Example 5 | Comparative Example 6 |
|---|---|---|---|---|---|---|---|
| (A) | (A-1) | | 100 | 100 | 100 | 100 | |
| | (A-2) | | | | | | |
| | (A-3) | | | | | | 100 |
| | (A-4) | | | | | | |
| | (A-5) | 100 | | | | | |
| (B) | (B-1) | | | 0.33 | | 0.33 | 0.33 |
| | (B-2) | | | | | | |
| (C) | Lactic acid | | | | 0.03 | 0.03 | 0.03 |
| | Acetic acid | | | | | | |
| Silicone composition | | - | - | (12) | (13) | (14) | (15) |

| Evaluation results | | | | | | | |
|---|---|---|---|---|---|---|---|
| Water dispersibility | | × | × | × | × | × | × |
| Softness | | A | A | A | A | A | A |
| Pre-wash water absorbency (s) | | 95 | 149 | 118 | 152 | 122 | 129 |
| Post-wash water absorbency (s) | | 100 | 128 | 130 | 108 | 110 | 121 |
| Durability to washing (residual ratio, %) | | 66 | 75 | 66 | 71 | 70 | 68 |

### INDUSTRIAL APPLICABILITY

The silicone compositions of the invention have an excellent water dispersibility and also are able to impart an excellent water absorbency to fiber surfaces. Moreover, textile treatment agents that use the silicone compositions of the invention also have a good durability, enabling fiber surfaces after washing to maintain a high water absorbency.

## Claims

1. A silicone composition comprising component (A1) below, and component (B) and/or component (C) below:
(A1) 100 parts by weight of copolymer which has siloxane groups and polyoxyalkylene groups on the molecule and is the product of a reaction between nitrogen atom-containing organopolysiloxane of general formula (1-1) below and polyoxyalkylene group-containing epoxy compound of general formula (2-1) or (2-2) below 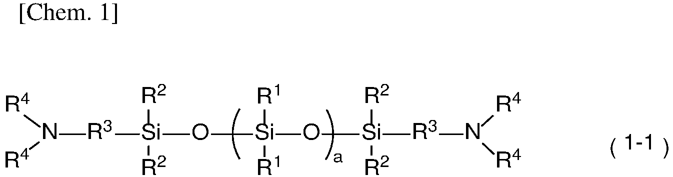 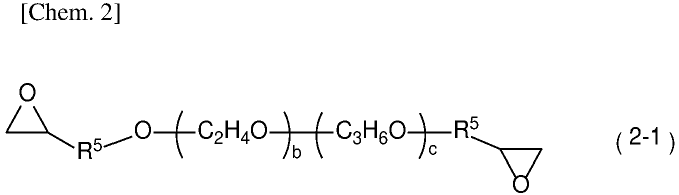 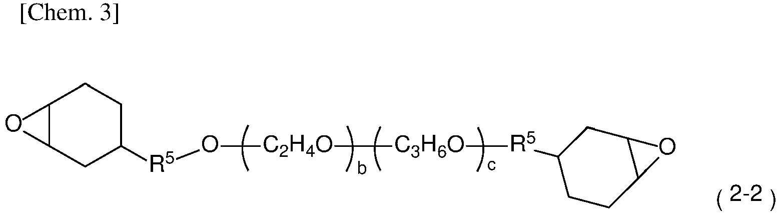 (wherein each R¹ independently is an alkyl group of 1 to 6 carbon atoms or a phenyl group; each R² independently is R¹, an alkoxy group of 1 to 6 carbon atoms or a hydroxyl group; each R³ independently is a divalent organic group; each R⁴ independently is a hydrogen atom or a monovalent hydrocarbon group of 1 to 6 carbon atoms, with the proviso that at least one of the R⁴ groups bonded to each nitrogen atom is a hydrogen atom; each R⁵ independently is a divalent organic group; a is an integer from 1 to 1,000, b is an integer from 0 to 100, c is an integer from 0 to 100 and b+c is an integer from 1 to 100);
(B) from 1 to 50 parts by weight of polyether-modified silicone of general formula (4) below 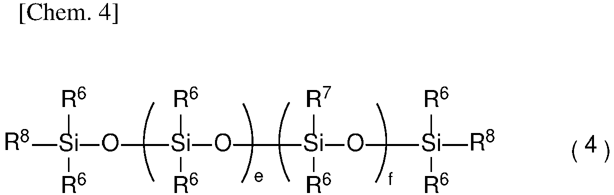 (wherein each R⁶ independently is a phenyl group, an alkyl group of 1 to 6 carbon atoms, an alkoxy group of 1 to 6 carbon atoms or a hydroxyl group; each R⁷ independently is a monovalent organic group of the formula -C_{g}H_{2g}O(C₂H₄O)ₕ(C₃H₆O)ᵢR⁹; each R⁸ independently is R⁶ or R⁷; R⁹ is a hydrogen atom, an alkyl group of 1 to 6 carbon atoms or an acetyl group; and e is an integer from 0 to 100, f is an integer from 0 to 100, e+f is an integer from 0 to 200, g is an integer from 2 to 5, h is an integer from 1 to 40 and i is an integer from 0 to 40, with the proviso that when f = 0, at least one R⁸ group is R⁷);
(C) from 0.1 to 20 parts by weight of organic acid.

2. A silicone composition comprising component (A2) below, and component (B) and/or component (C) below:
(A2) 100 parts by weight of a copolymer which has siloxane groups and polyoxyalkylene groups on the molecule and is the product of a reaction between epoxy group-containing organopolysiloxane of general formula (1-2) or (1-3) below and polyoxyalkylene group-containing amine compound of general formula (2-3) below 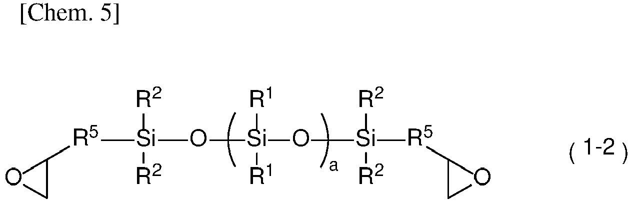 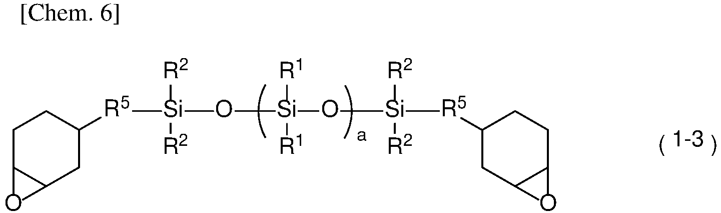 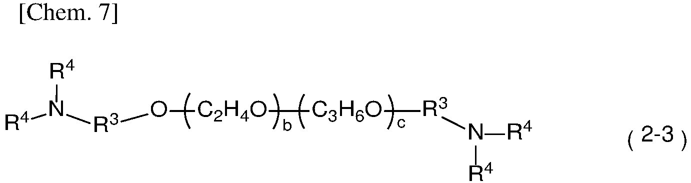 (wherein each R¹ independently is an alkyl group of 1 to 6 carbon atoms or a phenyl group; each R² independently is R¹, an alkoxy group of 1 to 6 carbon atoms or a hydroxyl group; each R³ independently is a divalent organic group; each R⁴ independently is a hydrogen atom or a monovalent hydrocarbon group of 1 to 6 carbon atoms, with the proviso that at least one of the R⁴ groups bonded to each nitrogen atom is a hydrogen atom; each R⁵ independently is a divalent organic group; a is an integer from 1 to 1,000, b is an integer from 0 to 100, c is an integer from 0 to 100 and b+c is an integer from 1 to 100);
(B) from 1 to 50 parts by weight of polyether-modified silicone of general formula (4) below 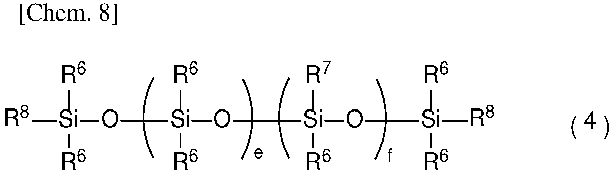 (wherein each R⁶ independently is a phenyl group, an alkyl group of 1 to 6 carbon atoms, an alkoxy group of 1 to 6 carbon atoms or a hydroxyl group; each R⁷ independently is a monovalent organic group of the formula -C_{g}H_{2g}O(C₂H₄O)ₕ(C₃H₆O)ᵢR⁹; each R⁸ independently is R⁶ or R⁷; R⁹ is a hydrogen atom, an alkyl group of 1 to 6 carbon atoms or an acetyl group; and e is an integer from 0 to 100, f is an integer from 0 to 100, e+f is an integer from 0 to 200, g is an integer from 2 to 5, h is an integer from 1 to 40 and i is an integer from 0 to 40, with the proviso that when f = 0, at least one R⁸ group is R⁷); and (C) from 0.1 to 20 parts by weight of organic acid.

3. A silicone composition of claim 1 or 2, wherein subscript e in formula (4) for component (B) is an integer from 0 to 50.

4. A textile treatment agent comprising a silicone composition of any one of claims 1 to 3.

5. A textile treatment agent of claim 4, further comprising (D) water.
